# EUROPEAN PATENT SPECIFICATION

(11) **EP 0 943 825 B1**
(45) Date of publication and mention of the grant of the patent: **25.05.2005**
(21) Application number: 99105664.9
(22) Date of filing: 19.03.1999
(51) Int. Cl.: F16B 37/04, A47B 97/06

(54) **Mechanical metal connecting device and fittings therefor**
Metallische Verbindungsvorrichtung und Beschlagteile dafür
Dispositif de connexion métallique et leurs pièces de ferrure

(30) Priority: 20.03.1998 IT MI980202 U
(43) Date of publication of application: 22.09.1999
(73) Proprietor: GIA S.p.A., 28069 Trecate (Novara) (IT)
(72) Inventor: Guaglio, Antonio, 28069 Trecate (Novara) (IT)
(74) Representative: Cicogna, Franco

(56) References cited:
- EP-A- 0 507 296
- EP-A- 0 826 889
- DE-A- 3 437 491
- DE-U- 20 002 172
- NL-A- 8 003 184
- US-A- 3 068 968
- US-A- 6 092 957

## Description

### BACKGROUND OF THE INVENTION

The present invention relates to a mechanical connecting device and fittings therefor, specifically designed to be used as a structural supporting element, as set forth in the preamble of claim 1.

As is known, in a lot of operating conditions it would be useful to have supporting elements susceptible to be easily assembled and very reliable construction-wise in order to provide supports for pipes, electrical channels, scaffoldings and for meeting a lot of different connecting requirements.

To that end, are in particular used several different types of metal section members, usually made of a steel material, which, together with their connecting fittings, such as angled fittings, nuts and plates, provide connecting means for connecting elements to a wall, or for providing useful supporting elements.

The mentioned section members are conventionally mechanically coupled to one another by their coupling fittings, together with one or more bolts.

In this connection it should be apparent that the shape of the made support will vary depending on the intended use and on the number of used section members.

While the above mentioned connecting devices solve the mentioned technical problem, they are affected by the following disadvantages.

Actually, all the mutually contacting portions, included those pertaining to the elements supported by said devices, can be displaced with respect to one another, notwithstanding the clamping thereof performed at the assembling time.

The above mentioned mutual displacement can be caused by accidental stresses, vibrations or other incontrollable events.

In particular, the mentioned movements are frequently. caused by a lacking of a suitable rough surface at the contacting regions of said elements.

Such a drawback is particularly exhibited by NL 8 003 184 which is the most relevant prior art document. The connecting device disclosed therein comprises special angle fittings made up of parallel plates interconnected by a U-bent bracket and provided with knurled inner surfaces. Said rough surfaces are to be pressed into smooth surfaces of the inwardly bent edges of the supporting rail when the corresponding screw is tightened. This means that the fittings of said known devices must be special fittings and that it is not possible to use any normal fitting commercially available. Further, the interaction of the smooth surfaces of said rail and of the rough surfaces of said fittings does not assure that these latter are effectively locked on the supporting rail.

The same drawbacks apply to the connecting device known from EP-A 826 889 disclosing once more a C shaped rail for fastening a very special nut element, again made up of two parallel plates interconnected by means of a U-bent bracket. Also in this case, the special nut has a knurled upper contact surface engaging the lower surface of the inwardly bent edges of the rail which should also be a knurled surface. It is important to stress that also in this case the fitting is a special one having at least one knurled surface whereas only the opposite surface of the inwardly bent edges is a knurled surface.

### SUMMARY OF THE INVENTION

Accordingly, the aim of the present invention is to overcome the above mentioned drawbacks affecting the prior art.

For achieving the above aim, the invention specifically relates to a mechanical connecting device and fittings therefor, which has been specifically designed to be used as a structural supporting element, which can be easily made, with a low making cost, and which is adapted to provide a very reliable connection.

The subject mechanical metal connecting device and fittings therefor, specifically designed to be used as a structural supporting element, is characterized in that it has the features disclosed in claim 1.

The subject metal mechanical connecting device, specifically designed to be used as a structural supporting element, provides the following advantages.

Said device, as it is used for connecting several elements to be connected thereby, provides a very stable construction, due to the fact that the components are absolutely prevented from sliding with respect to one another.

A further advantage is that the device can be constructed very easily, since the processing steps to provide the rough surfaces are performed either on outer extended surface regions or on both the side edges thereof.

Accordingly, the device can be made at a comparatively low cost, and, furthermore, also the assembling cost for connecting the components to be connected are very reduced, since the assembled components, being very stable, would require a reduced maintenance.

### BRIEF DESCRIPTION OF THE DRAWINGS

Further characteristics, advantages and constructional details of the mechanical metal connecting device according to the present invention, specifically designed to be used as a structural supporting element, will become more apparent thereinafter from the following detailed disclosure with reference to the accompanying drawings, where are illustrated, by way of an indicative, but not limitative example, some preferred embodiments of the device.

In the drawings:

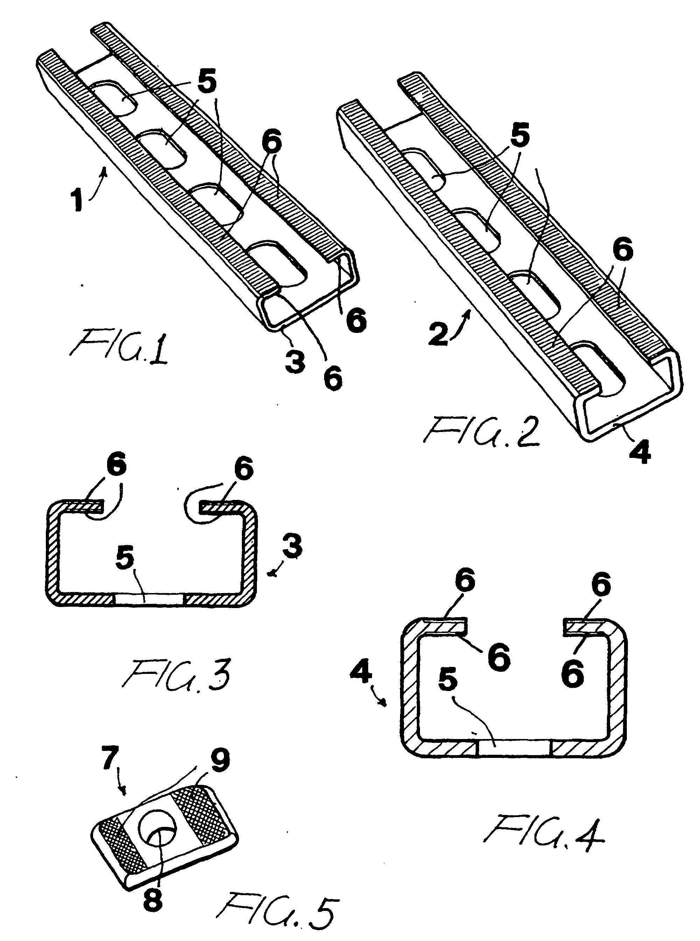

Figure 1 is a perspective view of a connecting device according to the present invention.
Figure 2 is a further perspective view of a like connecting device.

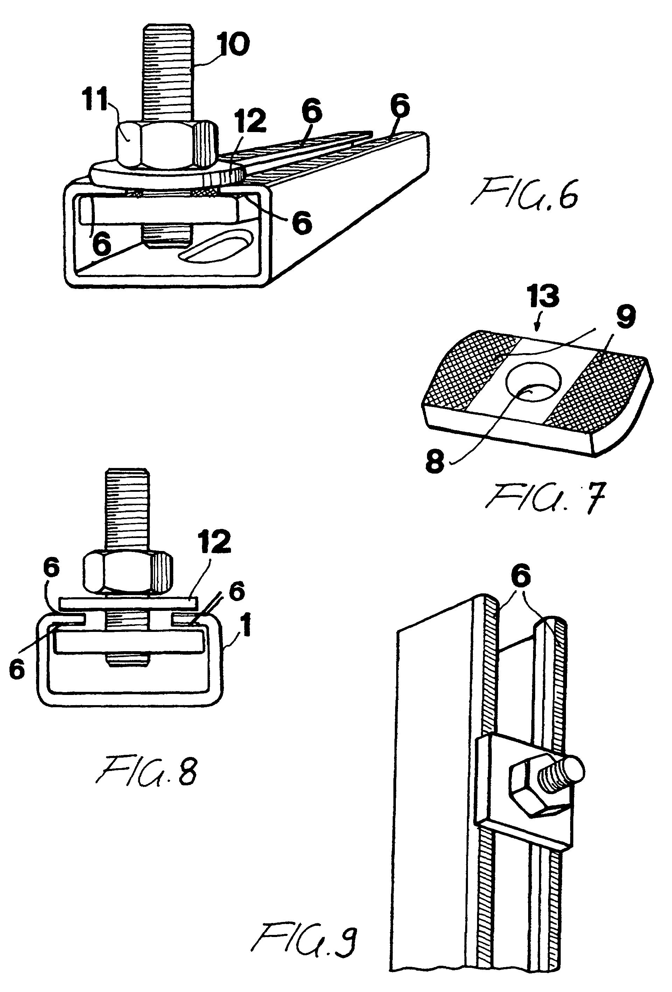

Figure 3 is a vertical cross-sectional view of the device shown in Figure 1.
Figure 4 is a further vertical cross-sectional view of the device shown in Figure 2.
Figure 5 is a perspective view of a fitting included in the subject connecting device.
Figure 6 is a further perspective view of a first assembled construction made by the subject connecting device.
Figure 7 is a further perspective view of a further fitting of the connecting device according to the present invention.
Figure 8 is a side view of the assembled construction shown in Figure 6.

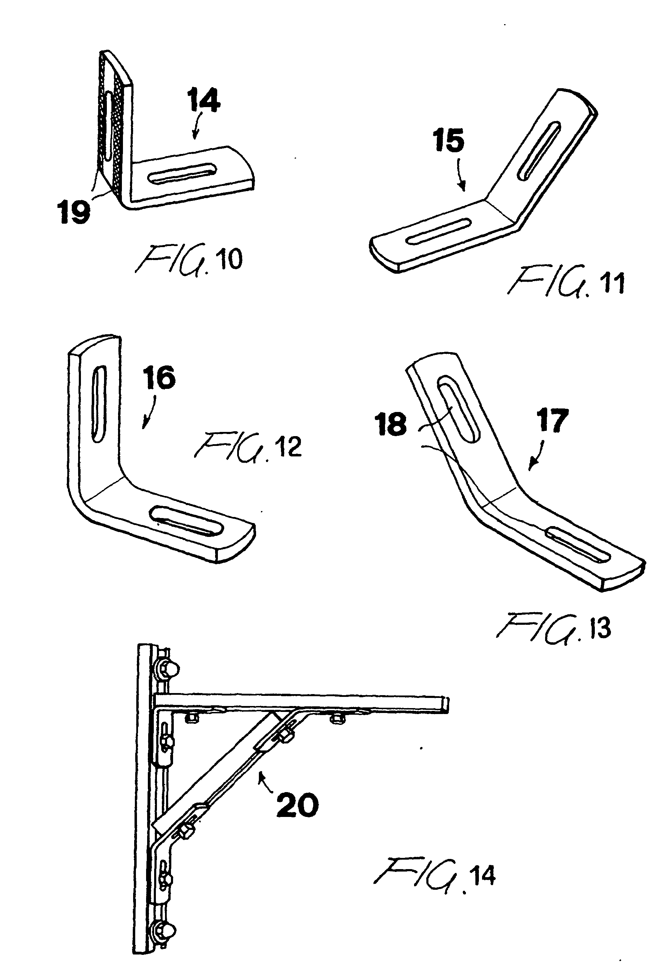

Figure 9 is a further perspective view of a further assembled construction made by the subject connecting device.
Figures 10 to 13 show perspective views of different angle fittings included in the connecting device according to the invention.
Figure 14 is a further perspective view of a supporting construction made by the subject device and fittings associated therewith.

### DESCRIPTION OF THE PREFERRED EMBODIMENTS

With reference to the number references of the above mentioned figures, the mechanical metal connecting device and fittings thereof, specifically designed to be used as a structural supporting element, comprises a body of open or closed cross section configuration.

More specifically, a section member 1 in the form of an elongated body advantageously made of a steel material is provided, said section member 1 having a thin open cross section 3, of C shape, and being provided with a plurality of ports 5 along the greater length portion thereof.

Said section members are advantageously provided with two knurled outer edges 6, for contacting the connecting fittings according to the invention, or for supporting outer elements to be supported by said connecting device.

The knurling operation can be replaced by different processes, adapted to provide a rough surface having a high friction coefficient.

Alternately, a section member 2, analogous to the preceding section member, can have a cross section 4 with thick walls in order to support larger loads.

In order to provide efficient mechanical connections, are advantageously provided fittings including connecting nuts 7 and 13, which are differentiated by their perimetrical shape and thickness, but which would operate in a like manner from a mere functional standpoint.

In fact, both embodiments provide a central hole 8 for receiving therein a threaded element and knurled surfaces 9, at the contacting regions provided between the mentioned nuts 7, 13, the section members 1, 2, further fittings or other outer elements to be supported by the subject devices.

Also in this case, the knurling processing can be replaced by any other types of suitable roughing method, adapted to provide high friction surfaces 9.

As auxiliary means for providing a mechanical connection by a subject device, are advantageously used hexagonal nuts 11 or bolts of any desired types, threaded elements 10 and flat washers 12 which elements are well known in the art and easily available.

For providing supporting constructions to be connected to a wall, angle fittings 14, 15, 16, 17 of any suitable shape and size would be provided.

Said fittings would be provided with one or more ports 18 in order to allow said elements or fittings to be easily connected to the devices according to the invention, to provide any desired supporting constructions.

Advantageously, the mentioned angle fittings or elements, would be provided on both edges thereof, with knurled surfaces 19 to be contacted by the devices 1, 2, fittings 7, 13 as above illustrated, or any other outer elements to be supported by said devices.

Said regions comprise, in this case, both the outer side edges and, as illustrated, the knurled surfaces can be replaced by any other different types of rough surfaces, with a high friction coefficient.

The configuration and size of the elements constituting the subject metal connecting device can be designed depending on the contingent applications and requirements without departing from the scope of the invention.

In particular, the mode of use of the devices 1, 2 and fittings 7, 13, 14, 15, 16, 17 according to the invention can be easily deduced from the above disclosure.

By using the hexagonal nuts 11, flat washers 12 and threaded elements 10 it will be possible to mechanical connect two or more of said devices in order to provide any desired supporting construction.

In particular, the use of the angle elements or fittings 14, 15, 16, 17 will allow to easily make supporting constructions 20 to be connected to a wall, for example for supporting pipes or channels of any desired types.

Moreover, the knurled surfaces 6, 9, 19 will contact one another and outer elements mechanically connected to the subject devices, thereby providing a very stable construction due to the friction existing between the contacting parts.

Thus, the mechanical connection provided by the mentioned nuts, bolts or like elements, will be reinforced by the friction generated by the knurled surfaces.

In this connection it should be apparent that the section member 1 will be knurled on the two bearing outer edges 6 thereof and/or on the inner edges thereof.

The disclosed fittings can be knurled or made rough on a portion of their surfaces or through the overall surfaces thereof, in order to meet any supporting requirements.

## Claims

1. A mechanical metal connecting device and fittings to be fixed thereto, particularly designed to be used as a supporting structure, said device comprising an elongated body (1, 2) having a C-shaped cross section with two inwardly bent edges (6) for clamp fastening said fittings, **characterized in that** both the outer and the inner surface of said edges (6) are provided with a rough, knurled or the like structure for friction engagement with the adjacent smooth or rough surface of said fittings.

2. Mechanical device and fittings according to claim 1, wherein said fittings comprise nuts (7, 13) and a washer (12) both provided with a central hole (8).

3. Mechanical device and fittings according to claim 1, wherein said fittings comprise angle elements (14, 15, 16, 17) provided with slots (18).

## Patentansprüche

1. Mechanische metallische Verbindungsvorrichtung und daran zu befestigende Beschlagteile, insbesondere ausgebildet, um als Stützkonstruktion verwendet zu werden, wobei die Vorrichtung einen länglichen Körper (1, 2) umfasst, der einen C-förmigen Querschnitt mit zwei einwärts gebogenen Kanten (6) zum Anklemmen der Beschlagteile aufweist, **dadurch gekennzeichnet, dass** sowohl die äußere als auch die innere Oberfläche der Kanten (6) mit einer rauen, gerändelten oder ähnlichen Struktur für reibschlüssiges Ineinandergreifen mit der benachbarten glatten oder rauen Oberfläche der Beschlagteile versehen sind.

2. Mechanische Vorrichtung und Beschlagteile nach Anspruch 1, wobei die Beschlagteile Muttern (7, 13) und eine Unterlegscheibe (12), die jeweils mit einem mittigen Loch (8) versehen sind, umfassen.

3. Mechanische Vorrichtung und Beschlagteile nach Anspruch 1, wobei die Beschlagteile Winkelelemente (14, 15, 16, 17) umfassen, die mit Schlitzen (18) versehen sind.

## Revendications

1. Un dispositif mécanique de raccord en métal et des ferrures à fixer à ce dernier, destiné en particulier à être utilisé comme structure de support, ledit dispositif comprenant un corps allongé (1, 2) ayant une section transversale en forme de C avec deux bords courbés vers l'intérieur (6) pour fixer par serrage lesdites ferrures, **caractérisé en ce que** les surfaces extérieure et intérieure desdits bords (6) sont toutes les deux munies d'une structure rugueuse, moletée ou similaire pour venir en contact frictionnel avec la surface adjacente lisse ou rugueuse desdites ferrures.

2. Dispositif mécanique et ferrures selon la revendication 1, dans lequel lesdites ferrures comprennent des écrous (7, 13) et une rondelle (12), tous étant munis d'un trou central (8).

3. Dispositif mécanique et ferrures selon la revendication 1, dans lequel lesdites ferrures comprennent des éléments d'angle (14, 15, 16, 17) munis de fentes (18).
